# EUROPEAN PATENT SPECIFICATION

(11) **EP 0 566 572 B1**
(45) Date of publication and mention of the grant of the patent: **22.04.1998**
(21) Application number: 91916348.5
(22) Date of filing: 05.07.1991
(51) Int. Cl.: C04B 35/74, C04B 35/653, H01M 8/12, C23C 2/04

(54) **DUCTILE CERAMIC COMPOSITES**
DUKTILE KERAMISCHE ZUSAMMENSETZUNGEN
COMPOSITES CERAMIQUES DUCTILES

(30) Priority: 06.07.1990 US 549464; 06.07.1990 US 549465; 06.07.1990 US 549466; 06.07.1990 US 549467; 06.07.1990 US 549468
(43) Date of publication of application: 27.10.1993
(73) Proprietor: IGR ENTERPRISES, INC., Beachwood, OH 44122 (US)
(72) Inventor: GORDON, Arnold, Z., Beachwood, OH 44122 (US)
(74) Representative: Modiano, Guido, Dr.-Ing.
(86) International application number: US9104784
(87) International publication number: WO9200934

(56) References cited:
- EP-A- 0 098 518
- EP-A- 0 299 788
- EP-A- 0 300 215
- US-A- 3 233 985
- US-A- 3 427 185
- US-A- 3 794 551
- US-A- 3 922 411
- US-A- 4 234 638
- US-A- 4 276 331
- US-A- 4 376 374
- US-A- 4 462 891
- US-A- 4 572 754
- US-A- 4 636 291
- US-A- 4 857 420

## Description

### Background of the Invention

### A. Field of the Invention

The present invention relates to novel solid state electrolytic cells comprising a ceramic composite body which is not subject to brittle failure in practical use. The present invention also relates to both a device for separating oxygen from air and to a fuel cell containing the electrolytic cells of the invention.

### B. Prior Art

Ceramics generally possess a number of desirable properties, including markedly high resistance to abrasion, heat and corrosion compared to metallic materials. Certain ceramics, such as stabilized bismuth solid oxides, stabilized ceria solid oxides and stabilized zirconia solid oxides are ionically conductive materials suitable for use as solid electrolytes. Other ceramics are known to possess superconducting electrical properties. Still others have been employed in structural applications. However, due to extreme brittleness, their application has been limited despite their other excellent properties.

United States Patent No. 4,857,420 discloses a method of making a monolithic solid oxide fuel cell stack wherein preformed, presintered subassembies, including an electrode subassembly, are stacked and heated to subsintering temperatures so that the stacked subassemblies form intimately conforming interfaces through creep flattening, thereby avoiding the microcracks found in the stacks disclosed in United States Patent No. 4,476,196.

A number of attempts have been made to increase toughness of ceramic materials by compounding them with another material including ceramic or metal whiskers such as silicon carbide whiskers. Composites with ceramic matrices and ductile metal inclusions such as those produced by Lanxide Corporation show high fracture toughness when compared to ordinary ceramic materials. See for example United States Patent Nos. 4,824,622; 4,847,220; 4,822,759; 4,820,461; and related 4,871,008. These composites are a chaotic, generally discontinuous, random metal dispersion in a ceramic composite body. They are prepared by a slow controlled oxidation of molten aluminum to alumina oxide, leaving behind approximately 5% of the parent metal. See also C.A. Anderson et al., Ceram. Eng. Sci. Proc., 9 [7-8] pp. 621-626 (1988); and M.S. Newkirk et al., Ceram. Eng. Sci. Proc., 8 [7-8] pp 879-885 (1987).

P. Ducheyne et al., J. Materials Science 17(1982) 595-606 discloses a bioglass composite produced by immersing premade porous fiber skeletons into molten bioglass to prepare metal fiber reinforced bioglass. These porous fiber skeletons produce random, chaotic, disordered support matrices and the process is applicable only to bioglasses.

United States Patent No. 4,764,488 discloses a high toughness ceramic composite of the fiber-reinforced type wherein metal fibers having the shape of triangular waves forming bent portions alternating on the opposite sides with an angle e of the bent portions in a range between 60° and 165° and a d/H ratio of between 0.025 and 0.6. While the discrete, discontinous fibers, unidirectionally anchored fiber reinforcement employed in the '488 patent improve the toughness of the ceramic, this technique does not solve the problem of crack propagation and ultimate failure.

United States Patent No. 4,776,886 discloses a whisker-reinforced ceramic matrix composite comprising a principal crystal phase selected from the group consisting of anorthite, barium-stuffed cordierite and mixed cordierite/anthorite prepared by extrusion of ceramic batches comprising an extrusion vehicle and a solid component essentially composed of inorganic whiskers and powdered glass.

See also United States Patent Nos. 4,376,374; 4,572,754; 4,334,380; 4,324,843; 3,768,760; 4,524,622; 4,522,759; 4,820,461; 4,847,220; 4,571,008; 4,764,488; 4,070,529; 4,552,766; 4,052,532; 4,396,450; 4,812,329; 4,462,891; 5,006,494.

United States Patent No. 3,794,551 discloses a precompressed armor material comprising a berylium boride ceramic matrix having a metallic wire network embedded therein.

One aspect of the present invention is a novel gas separation system which effectively separates oxygen from the air. The use of a tough, ductile solid electrolyte composite permits the construction of an oxygen generator device in which the only moving part is an air intake fan, and which does not require consumables such as hydrogen peroxide or catalysts requiring constant replenishment.

In recent years, there have been attempts to provide compact and lightweight oxygen generating systems that can supply oxygen gas for extended periods. Japanese Utility Model Publication No. 26445/1980 discloses an oxygen gas generating system adapted to catalytically decompose aqueous hydrogen peroxide using a manganese compound as the catalyst. This system has several drawbacks. The decomposition reaction of aqueous hydrogen peroxide and manganese dioxide proceeds at an explosively high rate if the volume of hydrogen periodixe is not carefully controlled. If the volume and rate of the hydrogen peroxide reservoir is decreased to make the unit portable, the hydrogen peroxide is rapidly consumed and the reservoir must be frequently replaced. For both reasons, this is not a practical approach.

Japanese Patent Publication No. 42115/1977 employs a platinum catalyst capable of decomposing aqueous hydrogen peroxide at a high concentration. This system is also unsatisfactory, both because it requires a reservoir of hydrogen peroxide which must be periodically replaced, and because of the expense and nature of the precious metal catalyst. One problem with this approach is that the usual pore size of the alumina or silica gel catalyst support is too small to permit penetration of the hydrogen peroxide. A major drawback is that the expensive catalyst has a limited life. A further drawback is the precise temperature control required.

One attempt to address the problems with hydrogen peroxide based oxygen generating systems is disclosed in Japanese Patent Publication No. 49843/1981 in which a system is provided for controlling the flow rate of hydrogen peroxide by valve adjustment using a link mechanism to control the supply of aqueous hydrogen peroxide depending upon the pressure of the generated oxygen gas. However, the proposed system for converting the gas pressure into mechanical displacement and transmitting the displacement by means of the link has the drawback of being unable to rapidly respond to the change in the reaction rate with resulting failures due to corrosion and abrasion in the actuating system.

United States Patent No. 4,792,435 discloses a system for producing oxygen by catalytic decomposition of aqueous hydrogen peroxide employing a platinum group catalyst carried on a highly porous sintered ceramic support of large pore size. This system again suffers from the drawback of requiring a hydrogen peroxide reservoir which must be periodically recharged or replaced.

United States Patent No. 4,784,765 provides an aquarium oxygen generator comprising a container inverted into the apex of a ceramic cone-shaped ceramic structure resting on the floor of the aquarium. Hydrogen peroxide solution (15%) in the container is decomposed to form oxygen and water in the presence of a catalyst pellet of finely divided silver admixed with clay. Hydrogen peroxide seeps into the cone, and in the absence of the catalyst, reacts with organic material in the water to produce oxygen which bubbles through an aperture in the side of the cone-shaped structure into the main body of water in the aquarium. While this system may be satisfactory for a small scale aquarium, it suffers from the drawback of requiring a hydrogen peroxide reservoir and is not suitable for medical, industrial and experimental (laboratory) uses.

See also United States Patent Nos. 4,879,016 and 4,636,291. U.S. 4,879,816 discloses an electrolyte assembly for oxygen generating devices which employs a brittle, conventional solid oxide electrolyte. U.S. 4,636,291 discloses a ceramic diaphragm for alkaline electrolysis.

The present invention solves the problems of the prior art and provides a system which generates oxygen from air, can be scaled up or down in size depending upon use, does not require consumables such as hydrogen peroxide or catalysts which must be replaced, and which is efficient and cost effective. The system of the present invention is made possible by the use of the novel electrolytic cell of the invention comprising a ductile, flexible and mechanically rugged, thin, solid state electrolyte ceramic composite.

Another application of the electrolytic cell of this invention is in a solid oxide fuel cell. Various types of fuel cells have been investigated and differ largely in the type of electrolyte employed. See A. Fickett, in Handbook of Batteries and Fuel Cells, by D. Linden, McGraw-Hill Book Co., New York, NY (1984) p. 41-10. Five major classes of fuel cells have emerged. These include the polymer electrolyte fuel cell (PEFC), the alkaline fuel cell (AFC), phosphoric acid fuel cells (PAFC), molten carbonate fuel cells (MCFC) and solid oxide fuel cells (SOFC). The operating temperatures for these fuel cells are approximately 80°C, 100°C, 200°C, 650°C and 1000°C respectively.

In 1988, the United States Department of Energy identified three basic fuel cell-types of current importance for near-term commercialization: the phosphoric acid fuel cells, molten carbonate fuel cells and solid oxide fuel cells. See Fuel Cells A Handbook May 1988, U.S. Department of Energy, Office of Fossil Energy, Morgantown Energy Technology Center, Morgantown, West Virginia, DOE/METC-88/6096.

While such cells provide an exciting option for the efficient conversion of fossil fuels to electricity, and could result in automobiles with mileages of 160 mpg or higher, as well as for stationary power plants and portable power plant applications, prior art technology has a number of problems.

Low temperature PEFC cells employ an electrolyte which is an ion-exchange membrane (fluorinated sulfonic acid polymer) that is an excellent proton conductor. The only liquid in this fuel cell is water, thus corrosion problems are minimal. Water management in the membrane is critical for efficient performance. Thus, the fuel cell must operate under conditions where the by-product water does not evaporate faster than it is produced because the membrane must be hydrated. Because of limitations on the operating temperature, usually less than 120°C, H₂-rich gas with little or no CO is used, and higher Pt loadings than those used for the PAFCs are required in both the anode and cathode. It remains to be seen whether this type of fuel cell can be successfully commercialized.

Phosphoric acid fuel cells (PAFC) were originally developed for operation on hydrocarbon fuels. Because the fuel cell can only utilize hydrogen derived from primary hydrocarbon fuels, it is necessary for the system to incorporate a fuel processing unit which adds steam to convert the primary hydrocarbon fuel to hydrogen and carbon monoxide. Adding this unit reduces overall electrical/fuel conversion to around 40%. The PAFC fuel cells employ porous electrodes which are fabricated from a specially developed, finely divided carbon black onto which crystallites (2-5 nm) of an electrocatalyst such as platinum are deposited. This component is supported on a porous carbon-paper substrate to form a composite structure which forms a stable three-phase interface in the fuel cell. The electrolyte is phosphoric acid which is a hazardous material.

The molten carbonate fuel cell (MCFC) is one of the two high-temperature systems regarded as "second generation" fuel cells. It has been in development for about 10 years, particularly in the United States and Japan, and units in the range of 1-20 kw are currently being evaluated. However, these systems suffer from severe corrosion of many of the components by the molten salt electrolyte.

Special features of the AFC, such as readily available fuel and oxidant already present for rocket motors, made this system an attractive power unit for the American space program. For example, 1.5 kw units were incorporated on the Apollo space craft used to take astronauts to the moon, and three 12 kw units provide the electrical supply power for the space shuttle. This type of fuel cell is widely used for aerospace and defense applications and is available as a reliable, well-proven system. However, it is very expensive to operate, since it requires pure hydrogen and oxygen and relatively expensive electrode materials such as finely divided platinum or gold/platinum on carbon porous electrodes. Thus a need remains for an efficient, cost effective fuel cell which can be employed in more mundane, but equally important applications such as automobiles, electric power plants and other industrial applications.

The last major class of fuel cell is the solid oxide fuel cell (SOFC). This system incorporates a ceramic solid oxide, typically with an approximate composition of Zr_{0.82}Y_{0.18}O_{1.95}. The anion vacancies created by introducing aliovalent Y³⁺ ions on the Zr⁴⁺ sites produce an oxygen ion conductor with a conductivity at 1000°C comparable to liquid electrolytes in the range of room temperature to 2,000°C. Because the electrolyte is solid, electrolyte management problems associated with other fuel cell types are eliminated. Further, the high-temperature operation allows in situ reforming of hydrocarbon fuels and electricity/fuel conversion efficiencies are expected to be higher than with other systems.

Attempts to construct SOFC systems during the period 1970-1975, while technically successful and resulting in small (10W) units which operated for more then 30,000 hours, the cost-efficient assembly of strong, tough ceramic components was difficult and most projects were soon abandoned. The 1980's saw a resurgence of interest in the SOFC systems because developments in ceramic technologies allowed fabricating monolithic ceramic electrolyte configurations incorporating thin components with high area/volume ratios.

A tubular configuration was used in various projects during the 1970's and this design has been optimized by Westinghouse and scaled up to produce 5 kw. See B.C.H. Steele, MRS Bulletin/June 1989, p. 23. The Westinghouse unit comprises a bundle of tubular solid oxide fuel cells in cooperation with an array of multiple air injector tubes (one for each fuel cell unit) with spacers to define an air plenum chamber, a combustion chamber, and a fuel plenum chamber.

More recently, increased attention has been devoted to planar configurations of the type depicted in FIG. 14. In the prior art planar arrangements, ceramic electrolyte plates approximately 100-200 µm thick having fracture stress around 800 MPa and fracture toughness (K_{IC}) in the 5-10 MPa m^{1/2} range have been reported. Because ceramics are inherently brittle, there is a strong dependence of mechanical failure characteristics on microstructural features, and better ceramic materials are needed to improve the reliability, performance and operating life of solid oxide fuel cells. The present invention provides a solid state electrolytic cell comprising such an electrolyte in the form of a ceramic composite body.

The other principal structural component of planar solid oxide fuel cell components is a bipolar plate incorporating gas channels. Prior art bipolar plates are usually fabricated from the well proven electronically conductive material LaCr_{0.9}Mg_{0.1}O₃ because of its compatibility with other components, which has been demonstrated in the tubular configurations. The porous cathode of the prior art planar solid oxide fuel cell design usually consists of La_{0.85}Sr_{0.15}MnO₃ and the porous anode, a thin layer of NiZr(Y)O₂₋ₓ cermet. If porosity and pore size distribution of the electrodes are carefully controlled during the processing stage, these components provide stable three-phase electrode-solid electrolyte-gas interfacial regions.

For a detailed review of the prior art, see A.J. Appleby and F.R. Foulkes, Fuel Cell Handbook (Van Nostrand, 1989); "Assessment of Research Needs for Advanced Fuel Cells" in Energy, Vol. 11, edited by S.S. Penner (1986) p. 1-229; S. Srinivasan, "Fuel Cells for Extraterrestrial and Terrestrial Applications," J. Electrochem. Soc. **136**, 41C, 1989; B.C.H. Steele et al., Direct Electrochemical Oxidation of Methane in Ceramic Electrochemical Reactors, Abstract of 1988 Fuel Cell Seminar (Oct. 23-26, 1988, Long Beach, CA); B.C.H. Steele, "Materials Engineering and Fuel Cell Development", MRS Bulletin/June 1989, pp. 19-23, Fuel Cells A Handbook, United States Department of Energy, Office of Fossil Energy, Morgantown Energy Technology Center, Morgantown, West Virginia (May 1988).

A principal limitation of current attempts to develop practical SOFC units is the brittle failure of the multi-layer all ceramic stack, in particular during thermal cycling. The present invention provides a solid state electrolytic cell comprising a superior solid electrolyte in the form of a ceramic composite body and an improved, simplified planar design for solid oxide fuel cells.

### Summary of the Disclosure

In its broadest aspect, the present invention provides a solid state electrolytic cell comprising a ceramic composite body and electrically conductive porous gas permeable electrode layers which form an anode and a cathode on opposite surfaces of said composite body, said composite body comprising: an ionically conductive ceramic matrix and a ductile metallic material extending throughout said ceramic body, said metallic material being an ordered, continuous, intersupported or interconnected array forming a repeating pattern structure, said metallic array being embedded within, surrounded by and in intimate contact with said ceramic matrix throughout the composite body so as to provide a high degree of interface between the ceramic and the metallic array, said ceramic matrix at any point not being more than 1 mm from said metallic array, said ceramic matrix having been subjected to a densification step whereby the density of said ceramic matrix is greater than 90% of theoretical density, said densification step comprising melting or sintering the starting ceramic matrix material without melting of the metal in the process of embedding said metallic array within, surrounding said metallic array by and placing said metallic array in contact with said ceramic matrix, said composite body not undergoing brittle failure of said ceramic matrix in practical use.

In one embodiment, said composite body is in the form of a sheet having a layer of mixed ionic and electronic conductive material coating opposite surfaces of said sheet and a layer of electronically conductive and porous gas permeable material coating each layer of the mixed conductive material, whereby a cathode is formed on one surface thereof and an anode is formed on the other surface thereof. The preferred form of the composite body is a planar structure which can be fabricated into various configurations such as tubes, arcuate sections, corrugated structures or flat plates.

In another embodiment, the present invention provides a solid state device for separating oxygen from air comprising the solid state electrochemical cell of this invention. Means are provided for connecting the cell to a power supply whereby when current is passed through the cell, oxygen is separated from air passing through the cell.

The solid state electrolytic cell of this invention also permits the fabrication of a superior solid oxide fuel cell.

The fuel cell comprises the solid state electrolytic cell of the invention and means for connecting said cell to an electrical load, whereby when current is generated from said cell, fuel and air are converted to electrical power.

In one embodiment, a plurality of individual cells are arranged in a planar stack array, said cells separated by air plenum chambers and fuel plenum chambers

In further embodiments of the fuel cell of the invention, the cell is in corrugated or tubular form.

### Brief Description of the Drawings

FIG. 1 is an perspective view of one preferred oxygen generator embodiment in accordance with the present invention with portions cut away for clarity and understanding.

FIG. 2 is a fragmentary, cut-away elevation view showing greater detail of an electrolytic cell stack within the oxygen generator assembly.

FIG. 3 is an enlarged elevation side view of a ductile ceramic multilayered single electrolytic cell unit employed in the oxygen generator assembly of FIG. 1.

FIG. 4 is a 100X photomicrograph of the preferred embodiment of an open ductile array for the solid electrolyte ceramic composite employed in the practice of this invention.

FIG. 5 is a 60X SEM of a preferred embodiment of solid electrolyte composite having a repeating pattern of the underlying diamond structure from the ductile array of FIG. 4.

FIG. 6 is a 50X optical photomicrograph of a solid electrolyte composite material employed in the practice of this invention.

FIG. 7 is a 6000X SEM photomicrograph of a section of a preferred embodiment of a solid electrolyte employed in this invention.

FIG. 8 is a photomicrograph of a section of the solid electroyte of FIG. 5 after it had been repeatedly bent 180° (in half) and straightened to determine the effect of intentionally excessive mechanical abuse.

FIG. 9 is a graph of conductivity vs temperature of a solid electrolyte composite using a 15 mole percent baria solution in bismuth oxide.

FIG. 10 is a graph of conductivity vs. temperature of a 20 mole percent solution of baria in bismuth oxide.

FIG. 11 is a graph of voltage vs. current of the electrolyte of FIG. 9.

FIG. 12 is a graph of voltage vs. current of the electroyte of FIG. 10.

FIG. 13 is an electrochemical schematic flow diagram of a ductile solid oxide fuel cell in accordance with the present invention.

FIG. 14 is a schematic of the basic cell and gas pathway design, shown in single segment form, employed in a repeating planar stack solid oxide fuel cell in accordance with the present invention.

FIG. 15 is a graph of the log resistance vs. 1000/T(K) of a yttria stabilized zirconia composite of the present invention.

FIG. 16 is a schematic flow diagram of a manifolded multicell stack design in accordance with the present invention.

### Detailed Description of Preferred Embodiments

The ductile, tough solid electrolyte ceramic composite of the present invention comprises a regular, ordered, continuous, repeating array of ductile intersupported or interconnected, metallic material, e.g. in the form of fibers, in intimate contact with the ceramic matrix so as to be substantially surrounded by or embedded within it and supporting the matrix. The ceramic employed is a highly ionically conductive material. Preferred ceramic phase materials in which the metallic material is embedded or surrounded are solid oxide electrolytes based on solid solutions of zirconia oxide, bismuth oxide or ceria oxides stabilized with a second component selected from a metal oxide wherein the metal ion has a valence of +2, +3, +5, or +6.

Other suitable oxides include, but are not limited to hafnia titania (TiO₂), other lanthanides such as ceria (CeO₂), samaria (Sm₂O₃), yttria (Y₂O₃), erbia (Er₂O₃), scandia, perovskites, pyrochlores, calcia (CaO), magnesia (MgO), gadolinia (Gd₂O₃) or a combination of one or more of the above oxides.

The preferred electrolyte ceramic phase is stabilized solid oxides. Preferred stabilized solid oxides include yttria stabilized zirconia, gadolinia stabilized ceria, baria stabilized bismuth oxide, and erbia stabilized bismuth oxide.

In one preferred embodiment, ceramic composites were prepared from 8 mole percent ytterbia stabilized zirconia and 9 mole percent yttria-stabilized zirconia as the ceramic phase and compounded with planar 60 mesh square weave Inconel 600 or Inconel 600 expanded foil as the ductile phase/array to yield a sheet of solid oxide electrolyte composite suitable for a mechanically tough solid oxide fuel cell. This physical array allows for approximately 90% of the volume of the composite to be the solid electrolyte, resulting in a high level of ionic conductivity through the plane of the composite.

The ytterbia materials were prepared from an alkoxide based sol-gel formulation in accordance with one embodiment of the present invention.

In another preferred embodiment, a bismuth baria rhombohedral system wherein the barium stabilized phase has a barium content of 15-25 mole percent of stabilizing oxide formula, preferably 15-20 mole percent, and most preferably 20 mole percent is employed as the ceramic phase of a solid electrolyte composite suitable for use in fabricating cells according to the present invention for oxygen and nitrogen generators.

Ceria stabilized with a metal oxide wherein the metal ion has a valence of +2 or +3 may also be used in the practice of this invention as the ceramic phase of the solid electrolyte composite. Representative stabilizing agents are oxides of yttrium, scandium, gadolinium and other rare earth and alkaline earth metals.

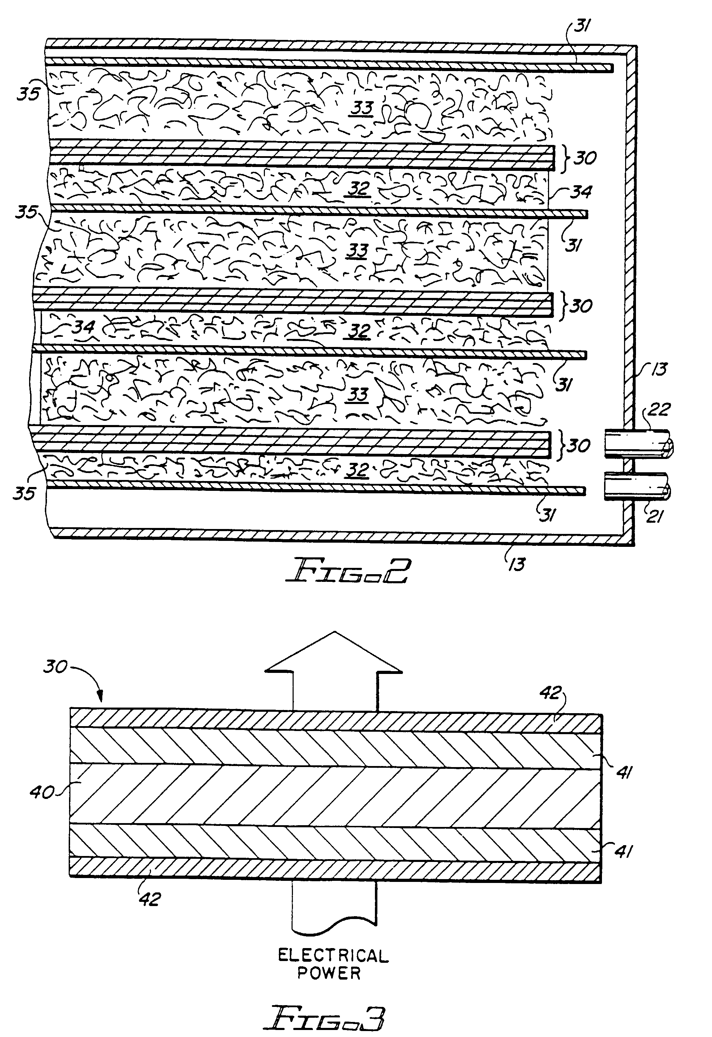

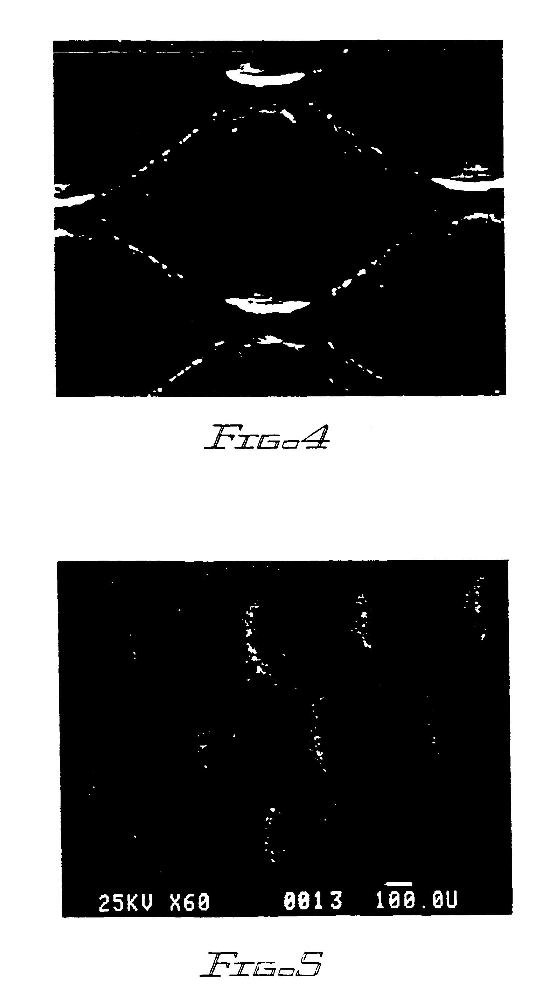

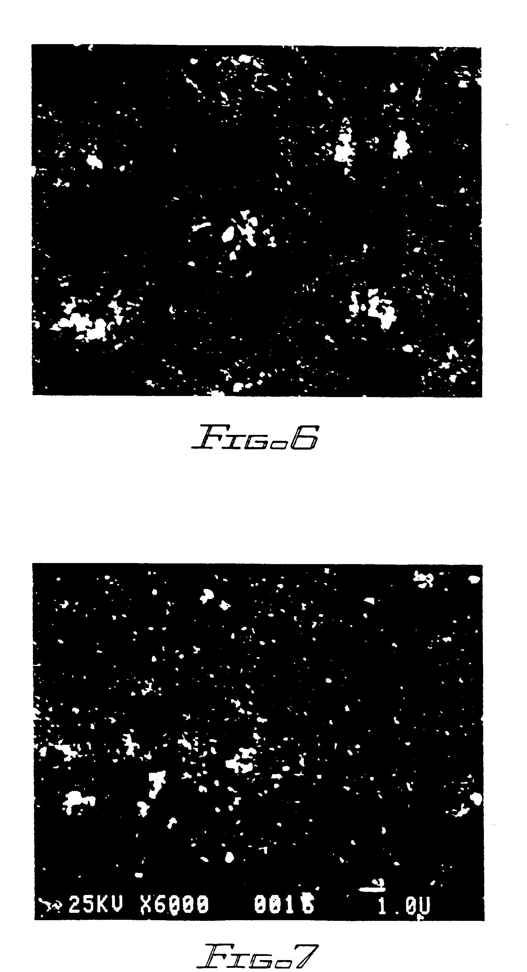

As best shown in FIG. 4, a preferred embodiment of the ductile component of the solid electrolyte composite employed in the practice of this invention is an intersupported, planar array of metallic ligaments forming a repeating diamond pattern. The line-of-sight openess of this array is about 65-70%. Ceramic volume fraction of the solid electrolyte ceramic composite composition is from 10% to 95 %. The preferred ceramic volume fraction of the final ceramic composite is about 90%.

The preferred material for the ordered, ductile array is a single layer of an open mesh metal structure. Especially preferred are expanded metal foils such - as Haynes 214 expanded metal foil. Especially preferred is an expanded metal foil produced in accordance with this invention from a solid sheet of Inconel 600 foil with an original thickness of 0.08 mm (0.003 inch).

The solid electrolyte composite employed in the practice of this invention may be a thin sheet-like structure having a thickness of 0.25 mm (0.01 inch) or less. It is preferred that the composite have a thickness of 0.08 mm (0.003 inch) or less. While one of the requirements of structures in which the composite is used, including an oxygen generator or fuel cell module, is that the components including the electrolyte composite be of sufficient mechanical strength to withstand stresses to which they will be exposed. This will normally dictate the thickness required. If very large sheets not laterally supported, as by current pickups, are desired greater thickness may be required.

Generally speaking, shape of the composite body is irrelevant to its operation. It may be square, rectangular, circular, pleated, corrugated, and the like. For best results it is preferred that the composite body employed in the electrolytic cell, which forms the essential element of the oxygen generator and solid oxide fuel cell of this invention, is at least 10 cm (4 inches) on a side, preferably 15 cm (6 inches) or more in diameter if round to provide an equivalent surface area.
Size will depend upon the end application. Portable oxygen generators for medical or other personal use, such as for firefighters, would use relatively small cells. For large, industrial applications, composite bodies having dimensions of 1 to 2 meters or more per side may be employed.

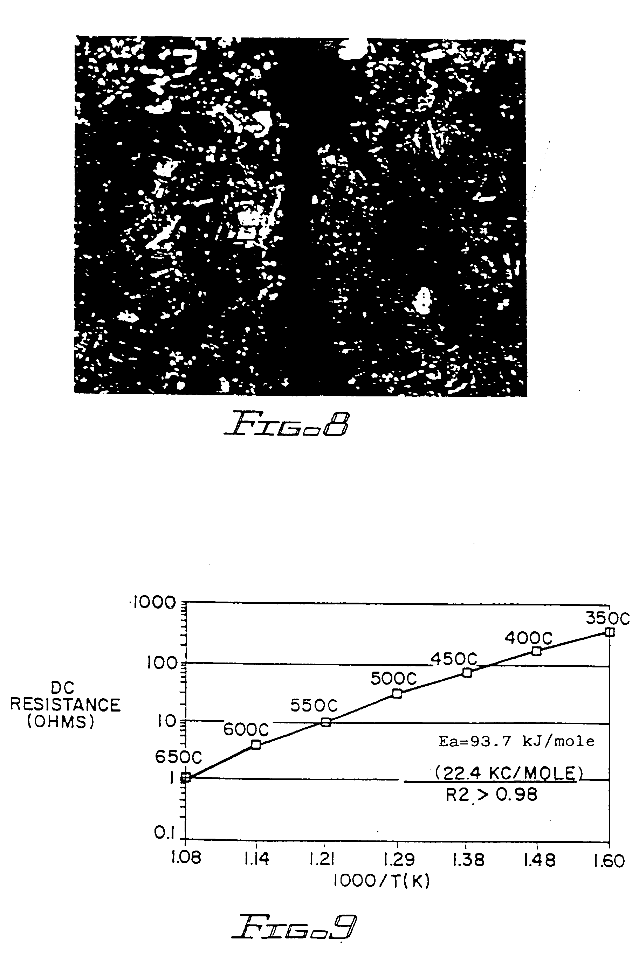

As shown in FIG. 5, in the solid electrolyte composite formulated in accordance with a preferred embodiment of the present invention, there is a repeating pattern of the underlying diamond structure of the ductile array. EDX analysis of the interface between metal and solid electrolyte ceramic showed a "metal oxide" with the composition CrNi₂Oₓ. The EDX analysis of the metal ligaments was consistent with the published values of Inconel 600 while the bulk ceramic phase was consistent within the precision of the EDX unit with the intended solid solution of bismuth and barium oxides.

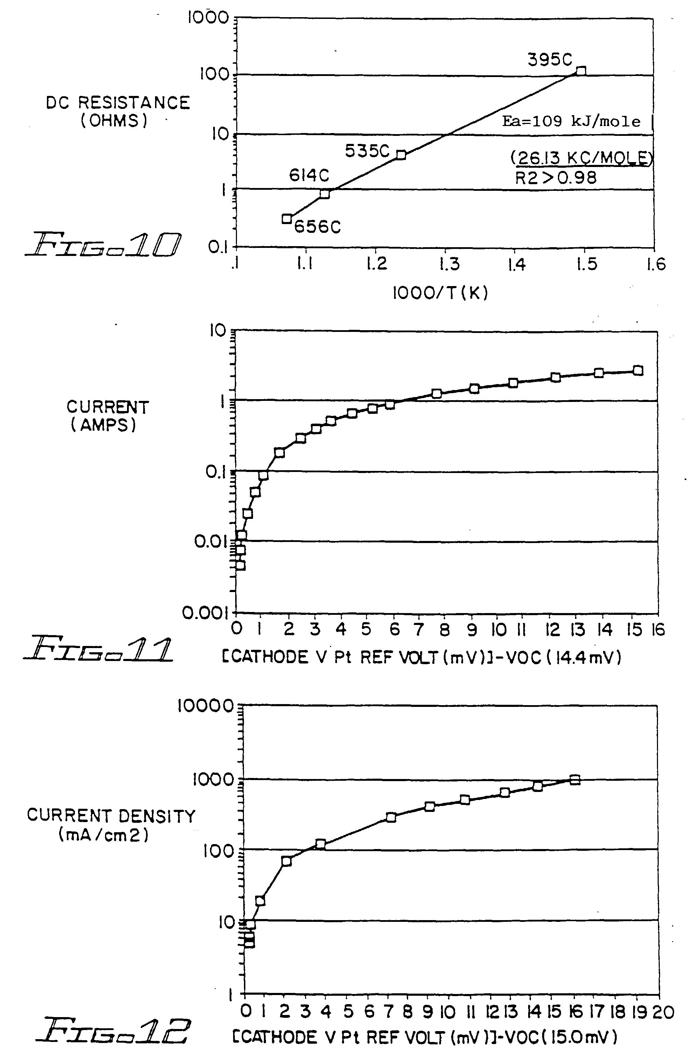

FIG. 6 is a 50X optical photomicrograph of a composite employed in the practice of this invention. The "diamonds" of ceramic oxide solid electrolyte with the interconnecting lines of metallic ligaments can be seen. Upon backlighting, the composite clearly showed its form with a yellow°range transmitted light interrupted in a precise regular repeating array of opaque (metallic) lines. The optically transmitting regions were the diamond shaped ceramic filled subsections.

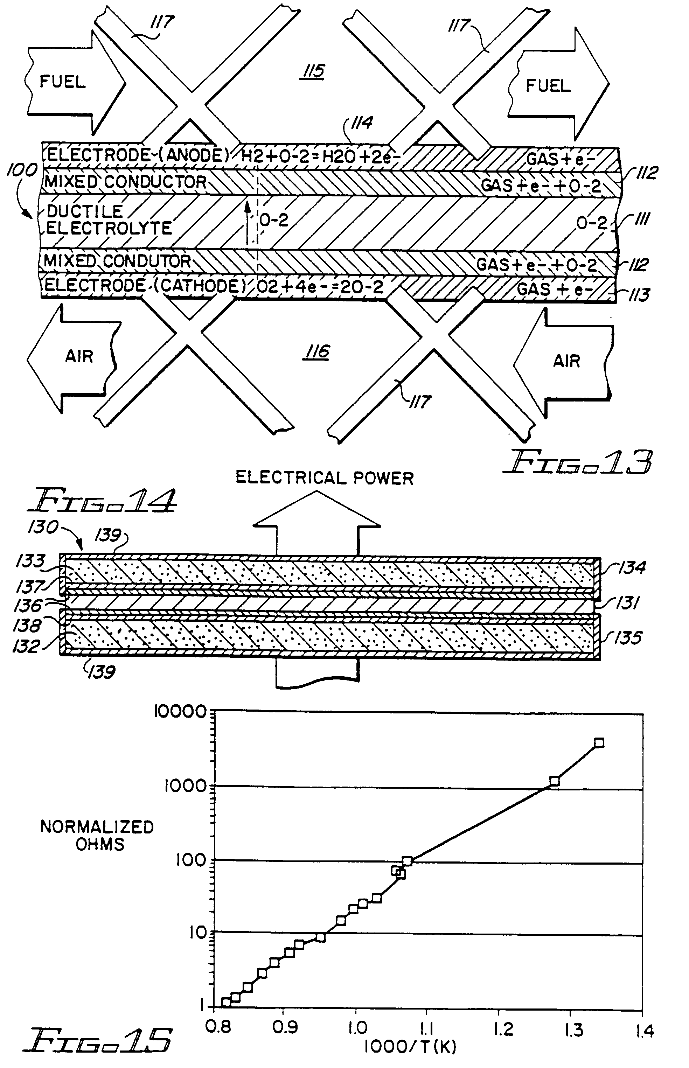

FIG. 7 is a 6000X SEM photomicrograph of a section of the solid electrolyte prepared in accordance with Example 2. The white occlusions are unreacted nearly pure bismuth oxide. The solid electrolyte composite was found to be quite flexible, capable of flexing out of plane by as much as 6.4 mm (0.25 inch) or more with finger tip pressure on a sample of about 5 cm (two inches) in length. A sample was repeatedly bent to 180° (folded in half) and straigthened to examine the effect of such mechanical abuse.

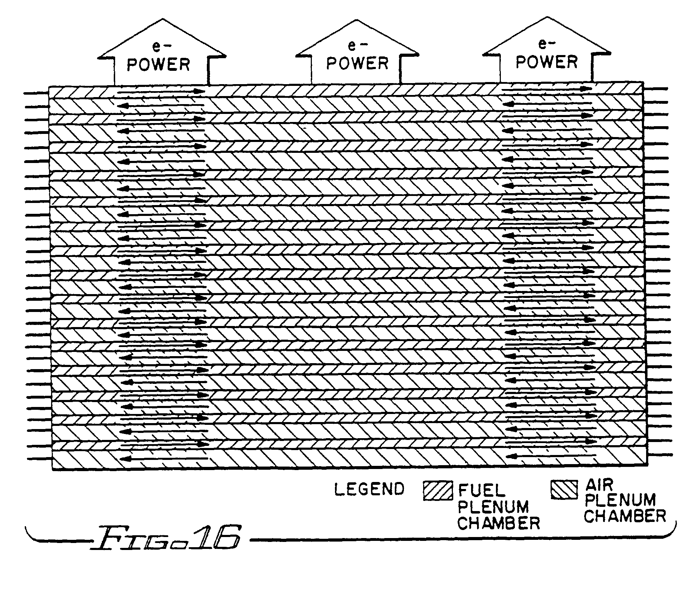

FIG. 8 is a photomicrograph of such a sample. As can be seen, despite the extreme mechanical abuse, a resulting crack only formed along the line of maximum stress or fold line. However, there was no crack propagating away from the fold line, and the crack that did appear did not even extend within a given, unsupported ceramic diamond area. The same ceramic composition, outside of the composite structure, would shatter. Prior art composite structures would not withstand such abuse.

FIGS. 9 and 10 depict the DC conductivity versus inverse temperature behavior of composites employed in the practice of this invention having 15 and 20 mole percent of BaO in the ceramic composition phase respectively. Solid electrolytes should exhibit a linear relationship between the log of the conductivity (resistivity) and the inverse Kelvin temperature. The 15% solid electrolyte showed a small but finite level of the monoclinic phase by X-ray diffraction (XRD), while the 30% baria solution showed only the pure rhombohedral phase at the precision level of XRD. The 20% curve (FIG. 10) exhibited a somewhat steeper slope that the 15% baria ceramic composite. This results in an energy of activation for the 20% baria material of about 109 kJ/mole (26 KC/mole), slightly higher than the 15% material. At the highest temperature measured, the curve for the 20% baria material may be exhibiting the change in slope as reported by Suzuki [J. Mat. Sci., 20 (1985), 3125] and others for bulk ceramic.

FIGS. 11 and 12 depict the voltage versus current behavior of these 15 and 20% baria electrolytic ceramic composites. The vertical axis is the logarithm of the current in amperes or in current density. The horizontal axis is the voltage between the cathodic electrode and the platinum reference electrode less the open circuit potential of 14-15 mV depending upon temperature.

Generally speaking, the high melting temperature electrolyte composites employed in the practice of this invention are prepared by forming a slurry of fine metal oxide powder having a particle size under 1 µm (micron) to yield a doughy slurry, adding an organic binder, preferably under 0.25% of a binder such as polyvinylalcohol, pouring or otherwise distributing the ceramic phase solution over the ductile support array to be embedded therein, firing in a reducing or inert atmosphere to approximately 1000° to 1400°C, preferably 1200° to 1350°C and most preferably 1300° to 1350°C for from 1 to 24 hours, cooling and repeating the cycle until there is >90% density in the ceramic.

It is especially preferred to anneal the composite under a directed energy source such as a carbon dioxide laser or electron beam. In this way, the ceramic can be heated above its melting point, permitting it to flow evenly around the ductile array, while the metal remains under its melting point. Beam rastering rates of approximately 2.5 cm/sec (1 inch/sec) work especially well.

The following examples further illustrate the ductile solid electrolyte composite employed in the practice of the invention.

### Example 1

A slurry of a molten hydrate melt of Ce(NO₃)₃·6H₂O, Gd(NO₃)₃·6H₂O and Ce_{.8}Gd_{.2}O_{1.9} was applied to Inconel 600 mesh (60 mesh) steel, suspended in a furnace with 0.2 mm (0.008 inch) Inconel wire and fired to approximately 650°C. After cooling, the composite was laser annealed using a CO₂ laser having a 10.6 µm wavelength, 600 W, 9.5 mm line by 0.13 mm (3/8 inch line by 0.005 inch). The ceramic melted, flowed and refroze without melting the metal support matrix. The annealing was done under flowing argon. A sample of composite was held on a computer controlled table and rastered under the CO₂ laser beam at a rate of 2.5 cm/sec (1 inch/sec). Very slow rates vaporized the sample and faster rates insufficiently melted the ceramic.

### Example 2

A bismuth baria solid electrolyte composite wherein the ceramic phase contains 20 mole percent baria was prepared as follows. Bismuth oxide (Bi₂O₃, 150 g) was mixed with Ba(NO₃) (11.7 g) and Bi₂O₃ (21 g) and poured into an alumina tray containing 340 g of 16% BaO. Upon melting, the final composition is (Bi₂O₃)_{.80}(BaO)_{.20}. The mixture was well stirred and heated to a temperature of 900°C for about 1-1/2 hours, then cooled to 860°C. A ductile array of Inconel 600 expanded metal foil having a line-of-sight openess of about 70% and forming a regular, structured, repeating diamond pattern was preoxidized by heating to approximately 700°C for about 1-1/2 hours in air. The preoxidized metal support or ductile array was dipped into the liquid ceramic phase to coat the ductile array with the ceramic phase, cooled and annealed at a temperature of 780°C.

### Example 3

A sheet of Whatman 541 filter paper was placed on a 90 mm diameter Buchner funnel. The funnel assembly was covered with a 3 mm (1/8 inch) thick neoprene gasket sheet having a 90 mm diameter. The neoprene gasket had a rectangular hole somewhat smaller than the composite sample. A second piece of rubber neoprene was placed in the hole on top of the Whatman 541 sheet to physically support the composite of Example 2 without sealing. The system, without a composite sheet, was wetted with ethanol and allowed to set. The composite prepared above was placed over the neoprene hole and sealed in place with a neoprene gasket.

A thin layer of the above bismuth baria slurry of Example 2 was painted on and allowed to dry for about 5 minutes. The sample was dried at 60°C, recoated on the opposite side and dried again. The composite was then fired at 700°C in air for about 20 hours. A second coat of the bismuth baria slurry was applied and the composite fired at 700°C for 15 hours in air. A third coat was applied and fired at 700°C in air for 1 week.

### Example 4

A solid electrolyte composite was prepared following the method of Example 2 with the following modifications. The surface of the composite was painted with a slurry of BiBaOₓ and 20% polyethyleneimine (50% aqueous) under suction in a Buchner funnel. The composite was dried at 125°C, the opposite side coated and dried as above. The composite was placed under a weight and fired in air at 680°C for 20 hours, cooled to room temperature and both sides were painted with 1 % aqueous polyethylenimine and partially dried. Both faces of the composite were painted with silver palladium paint and dried at 150-200°C. A second coat of silver palladium paint was applied and the composite fired at 350°C for 1 hour in air and cooled to room temperature. The composite cell was placed in a furnace under a weight and the temperature raised to 700°C, held for 10 minutes, reduced to about 550°C, and then heated in air at 700°C for 14 hours.

### Example 5

A cell body was constructed from a section of standard schedule 40 7.5 cm (three inch) SS316 pipe with external standard threads cut in one end. A planar disc of Inconel 600 expanded metal foil was tack welded on the end without the threads. The expanded foil disk was 13 cm (five inches) in diameter. The outer 2.5 cm (one inch) was cut radially into tabs approximately 1.3 cm (0.5 inch) centered over the unthreaded end of the pipe section and the tabs were bent down over the exterior sides of the pipe. The tabs were tacked in place with five welds of approximately 1.6 mm (1/16inch) in diameter arranged in a three/two pattern with the three at the far (wider) end of the tab. Additional welds were tacked every two or three mm along the upper rim of the pipe at approximately 3 mm (1/8 inch) intervals.

Following the method of Example 2, a ceramic phase of bismuth baria oxide solid solution was prepared and melted in an Inconel 600 deep drawn crucible. The crucible was placed in an oven and heated to 925°C for about 30 minutes. The crucible was periodically swirled to insure a chemically homogeneous melt and the temperature was reduced to approximately 850°C.

During the 30 minute thermal hold of the above procedure, the cell body was placed in the oven along side the crucible to heat it to the temperature of the melt. This is important because if cold metal is dipped into the melt, the relatively large thermal mass of metal cools the melt to below solidifying temperature which results in the melt freezing and the pipe section fusing to the frozen ceramic mass. It generally requires a minimum of 30 minutes to raise the metal to the appropriate temperature.

The furnace door was opened and the metal section grasped with long tongs and dipped into the open-topped crucible containing the melt. The cell was promptly removed from the furnace and placed on a concrete surface to cool. The composite top of the cell cooled to room temperature within seconds, although the pipe section took several minutes to cool. The cell unit was examined for pinholes and none were found.

Silver palladium paste was applied to the interior and exterior surfaces of the composite. The paste was dried at 110°C for 20 minutes and fired at 700°C for an additional thirty minutes. Several coats were applied using this procedure.

The room temperature electrical resistance between the interior coat (the anode, oxygen evolution site) and the exterior coat (the cathode, the oxygen dissolution site) was >30,000,000 ohms, the limit of the digital multimeters. This indicates the electrodes were not short-circuited. Electrical resistance between any two points on a given electrode at room temperature was about 0.2 ohms or less.

The exterior electrode was approximately 5 cm (two inches) in diameter and did not make direct electrical contact with the pipe. The silver paste of the interior electrode was intentionally spread onto the interior walls of the pipe, making an electrical connection between the housing and the interior electrode. There was no measurable room temperature electrical conductivity between the pipe and the exterior electrode.

A SS316 reducing union piece was then threaded onto the open end of the pipe section using high temperature thread sealant. The small end of the reducing union was connected to 3 mm (1/8 inch) stainless steel tubing using a SS 316 swagelock adapter. The 3 mm (1/8 inch) tubing extended out of a hole in the top of the furnace. About 46 cm (18 inch) of small diameter tubing extended out of the furnace. The "cold" end of the SS tube was connected to a section, about 0.9 m (3 feet) long, of standard 3 mm (1/8 inch) inside diameter (i.d.) Tygon tubing. This was the gas circuit.

When electrical power was applied to the cell, at temperatures of about 650°C, oxygen was produced at the anode. This was detected by immersing the end of the tygon tubing in a small dish of water and seeing a steady stream of bubbles. In the absense of electrical power, the flow of oxygen gas bubbles ceased.

### Example 6

An aqueous slurry of fine (ZrO₂)_{.91}(Y₂O₃)_{0.9} powder +0.25% polyvinylacetate was laser annealed using a CO₂ laser having a 10.6 µm wavelength, 600 W, 9.5 mm line by 0.13 mm (3/8 inch line by 0.005 inch). The ceramic melted, flowed and refroze without melting the metal support matrix. The annealing was done under flowing argon. A sample of composite was held on a computer controlled table and rastered under the CO₂ laser beam at a rate of 2.5 cm/sec (1 inch/sec). Very slow rates vaporized the sample and faster rates insufficiently melted the ceramic.

### Example 7

The slurry of Example 6 was painted onto Inconel 600 stainless steel foil and dried at 115 °C for 20 minutes. The sample was suspended in a 5 cm (2 inch) outside diameter (O.D.) mullite furnace tube in a silicon carbide electrically heated furnace, was flushed with argon and the argon flow left on. The temperature was raised at 5°C per minute to 1340°C for 3 hours and cooled to room temperature at 5°C per minute. The procedure was repeated two more times. On the last slurry application the slurry was sucked into pores of the composite under vacuum on a Buchner funnel. The last firing was for 15 hours.

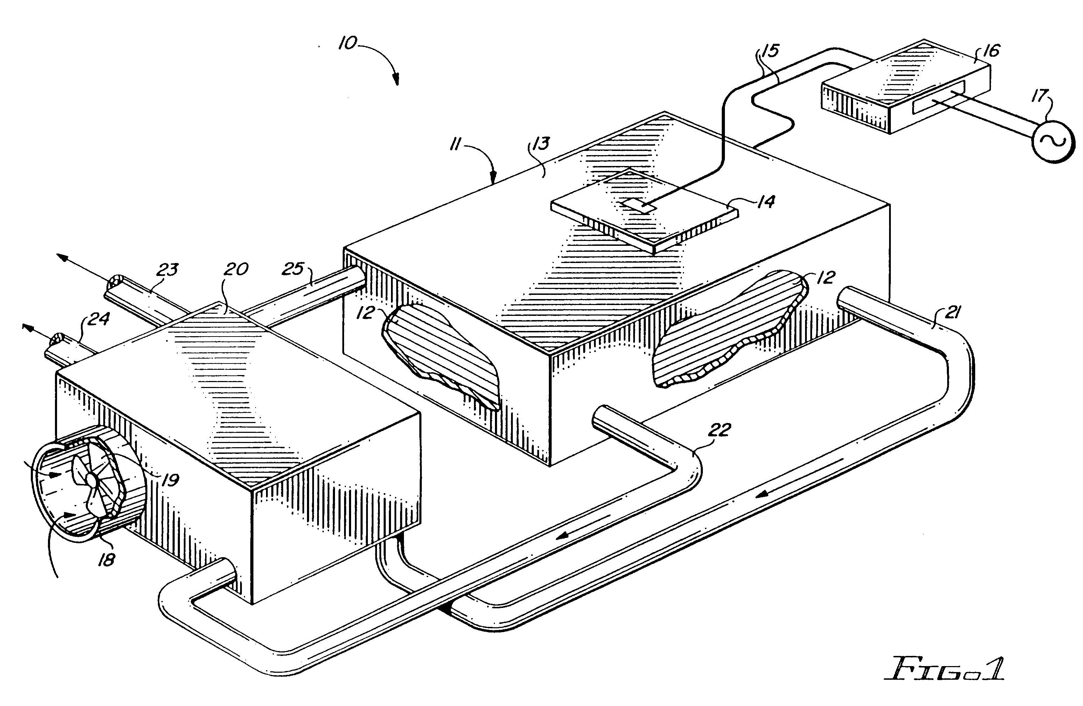

The solid electrolyte composite may be fabricated into cells of the invention for gas separation systems such as oxygen or nitrogen generator systems. Referring to FIG. 1, depicting one preferred embodiment, oxygen generator 10 comprises oxygen separator module 11. Oxygen separator module 11 comprises one or more individual solid electrolyte composite cells 30 (FIG. 3), placed in multiple plate stacked form 12, as shown in this view. In this preferred embodiment, the plurality of solid electrolyte cells are placed in modular stack array in which the individual solid electrolyte cells are electrically connected in series. Bipolar stack housing 13 carries electrode connector unit 14. Power control unit 16 may be disposed between power source 17 and the oxygen separator module by current conductors 15. The oxygen separator unit may be either battery powered or connected into a central remote generation source.

In operation, air is drawn into intake unit 18 by air collection fan 19. The air is heated in heat exchanger 20 and travels into oxygen separator module 11, via preheated air intake line 25, where it is separated into oxygen and oxygen depleted air. The oxygen is drawn from oxygen separation module 11 via oxygen conduit 21. Oxygen depleted air exits module 11 through conduit 22. The hot air and oxygen are passed through the heat exchanger, and the resulting cooled oxygen product exits through tube 23 while the cooled depleted air is released through vent 24.

Referring to FIG. 2, the interior detail of the electrolyte plates and plenum chambers within electrolyte stack housing 13 is shown. Plates 30, shown in parallel sheet arrangement, are electrically connected in series to each another by connectors 34. While these are depicted as separate elements in this view, fabrication may be simplified by having the plates formed in block I cross-sectional form so that each contacts those adjacent, with the end plate then having a block C cross section. Plenum chamber walls 31 are positioned on each side of all electrolyte plates in horizontal relationship so as to form a continuous stack within the housing. The plates are energized by the application of current.

Chamber walls 31 together with plates 30 form air plenum chamber 33 and oxygen plenum chamber 32. The chambers are continuous through housing 13 and are gas isolated from one another. Spanning the chambers are current pickups 35 formed of electronically conductive material such as metal structures fabricated in the form of wool, expanded metal pieces, posts, rods, channels, ribbons or mesh which serve to pass current across the chambers but do not unduly impede gas flow. In operation, preheated air enters the top of the stack into chamber 33 at a temperature generally slightly above 600°C. Oxygen within the air is transported in the form of oxide ions through the solid electrolyte plate and into the opposing oxygen plenum chamber 32. All air plenum chamber segments in the housing are gas parallel while all oxygen plenum chamber segments are likewise in gas parallel to one another and gas isolated from the air plenum. During passage of gases through the stack, application of a current causes a temperature increase, stabilizing typically at a temperature of from 600° to 700°C.

Oxygen which has been transported through each electrolyte plate 30 as the oxide ion collect in the oxygen plenum chamber on the opposing sides of the plates. Pressure build up from the transport of oxygen into the plenum chamber units causes oxygen flow to commence. The oxygen depleted air and the oxygen gas travel separately in gas parallel through the module and are conducted into the heat exchanger 20 through conduits 21 and 22 where cold air collected through intake unit 18 (Fig. 1) is heated by the depleted air which is then vented, and by the oxygen product gas which is cooled in the heat exchanger and collected.

During normal operation, the system usually requires no supplemental heat addition but runs at steady temperatures. An auxiliary heater, preferably located in the heat exchanger, may be required during start up until steady operating temperatures are achieved.

The plenum walls are formed of material that is electrically conductive and will withstand exposure to heated oxygen without being unduly oxidized. Preferred materials include 300 series stainless steel, 400 series stainless steel, Incolloy 800 HT, super alloys including Inconel 600 or 601 and Haynes 214.

In spacing the walls and electrolyte plates in stacked arrangement, as depicted, it is advantageous to have the height of the air plenum chamber units greater than that of the oxygen plenum chamber. This is to accommodate the larger volume of air passing through the module, compared to the small volume of oxygen being withdrawn. A ratio of 2:1, air plenum to oxygen plenum has been found to be quite suitable. Increasing the height of the chambers has the advantage of reducing pressure drop caused by the packing, but it has the disadvantage of increasing the overall size of the stack.

The current pickups 35 within the plenum chambers contact the electrodes and the bipolar plates. Electricity passes throught the plenums perpendicular to the gas flow which is horizontal. The pickups are suitably composed of the same materials as that used to form the plenum walls 31. While good electrical contact is needed to avoid undue voltage drop, the more porous the pickups are, or the less resistance they offer to gas flow, the better they operate by lessening restriction of gas flow and avoiding excessive pressure drop through the chambers. Connectors 34 shown as providing electrical contact between plates 30 may be redundant when suitable conductive material is used for the current pickups.

FIG. 3 depicts in large scale the layers forming the cell 30 which is the essential component of this invention. Solid electrolyte ductile ceramic composite 40 is the center layer of the cell. It is preferably sandwiched between mixed conductor layers 41 formed of solid electrolyte doped with multi-valent ions which make the layers both ionically and electronically conductive. The mixed conductive layers 41 are coated with electrically conductive gas porous electrode thin layers 42 which form an anode and a cathode on the surface of the cell.

The mixed conductor component 41 is formed of a solid electrolyte such as bismuth oxide or zirconia. The multi-valent doping materials which are suitable include praseodymium, terbium, cesium, iron and chromium.

The electrically conductive electrode surfaces on each side of the cell are preferably silver, silver alloys or conductive oxides such as perovskites.

The ductile, tough solid electrolyte ceramic composite employed in the practice of the present invention comprises a regular, ordered, continuous, repeating array of ductile intersupported or interconnected, metallic material such as fibers in intimate contact with the ceramic matrix so as to be substantially surrounded by or embedded within it and supporting the matrix. The ceramic employed in the invention is a highly ionically conductive material. Preferred ceramic phase materials in which the metallic array is embedded are solid oxide electrolytes based on solid solutions of bismuth oxide and a second component selected from a metal oxide wherein the metal ion has a valence of +2, +3, +5, or +6. The purpose of the stabilizing agent is to hold the bismuth oxide in the preferred crystal lattice symmetry in a temperature range at which it would otherwise convert to a less conductive, or nonconductive polymorph. In general, the optimum lattice symmetry is face centered cubic. However, the alkaline earths form rhombohedral phases with bismuth oxide and these phases are also extremely conductive.

Table I is a partial list of bismuth solid oxide electrolytes which may be employed in the practice of this invention.

**TABLE I**

| Bismuth Solid Oxide Electrolytes | | | | |
|---|---|---|---|---|
| Doped-Oxide | Electrolyte | Ω⁻¹cm⁻¹at 450°C (x 10³) | Σ/Σ° v T°C | Reference |
| Niobium | (Bi₂O₃)_{0.85}(Nb₂O₅)_{0.15} | 3.5 | 0.98 v 600 | JES, 124, 1563 (1977) |
| Vanadium | (Bi₂O₃)_{0.875}(V₂O₅)_{0.125} | 1.8 | 0.97 v 600 | JES, 124, 1563 (1977) |
| Yttrium | (Bi₂O₃)_{0.75}(Y₂O₅)_{0.25} | 3.2 | 0.98 v 550 | JAE, 5, 187 (1975) |
| Yttrium | (Bi₂O₃)_{0.80}(Y₂O₅)_{0.20} | 12 | | MRB, 21, 1215 (1986) |
| Tungsten | (Bi₂O₃)_{0.78}(WO₃)_{0.22} | 6.0 | 0.99 v 550 | JAE, 3, 65 (1973) |
| Strontium | (Bi₂O₃)_{0.8}(SrO)_{0.2} | 2.6 | 0.97 v 550 | JAE, 2, 97 (1972) |
| Cadmium | (Bi₂O₃)_{0.6}(CdO)_{0.4} | 25 | 0.0 v 500 | JAE, 2, 97 (1972) |
| Lanthanum | (Bi₂O₃)_{0.9}(La₂O₃)_{0.1} | 5.0 | 0.92 v 550 | JAE, 2, 97 (1972) |
| Lanthanium | (Bi₂O₃)_{0.85}(La₂O₃)_{0.15} | 8.1 | 0.96 v 500 | JSSC, 39, 173 (1981) |
| Samarium | (Bi₂O₃)_{0.9}(Sm₂O₃)_{0.1} | 5.1 | 1.0 v 500 | JSSC, 39, 173 (1981) |
| Neodymium | (Bi₂O₃)_{0.9}(Nd₂O₃)_{0.1} | 6.9 | 0.98 v 500 | JSSC, 39, 173 (1981) |
| Erbium | (Bi₂O₃)_{0.75}(Er₂O₃)_{0.25} | 3.9 | 1.02 v 500 | JSSC, 39, 173 (1981) |
| Erbium | (Bi₂O₃)_{0.8}(Er₂O₃)_{0.2} | 7.7 | 0.98 v 500 | JAE, 10, 81 (1980) |
| Molybdenum | (Bi₂O₃)_{0.6}(MoO₃)_{0.4} | 1.1 | 0.97 v 600 | JAE, 7, 31 (1977) |
| Gadolinium | (Bi₂O₃)_{0.9}(Cd₂O₃)_{0.1} | 3.5 | 1.0 v 600 | JAE, 5, 197 (1975) |
| Barium | (Bi₂O₃)_{0.8}(BaO)_{0.2} | 5.2 | 0.97 v 450 | JSSC, 16, 317 (1976) |
| Barium | (Bi₂O₃)_{0.84}(BaO)_{0.16} | 15 | | JMS, 20, 3125 (1985) |
| Praeseodymium | (Bi₂O₃)_{0.8}(Pr₂O_{11/3})_{0.2} | 1.9 | 0.98 v 500 | JAE, 12, 235 (1962) |
| Praeseodymium | (Bi₂O₃)_{0.9}(Pr₂O_{11/3})_{0.1} | 4.0 | | JAE, 12, 235 (1982) |
| Terbium | (Bi₂O₃)_{0.8}(Tb₂O_{3.5})_{0.2} | 0.61 | 0.96 v 500 | JAE, 15, 447 (1985) |
| Terbium | (Bi₂O₃)_{0.9}(Tb₂O_{3.5})_{0.1} | 4.1 | 0.87 v 500 | JAE 15, 447 (1985) |

The first column in Table 1 is the stabilizing agent which may be a metal or metaloid such as an alkaline earth, a lanthanide or a transition metal. The second column is the composition of the solid solution which is reported to exhibit the highest conductivity for a given pairing of metal ions. The third column lists the reported ionic conductivity at the somewhat arbitrary temperature of 450°C. The barium stabilized phase, with a barium content of 15-20 mole percent of stabilizing oxide formula as written is one of the most conductive.

The fourth column in this table is the transference number for the oxide conduction at the stated temperature. The transference number for oxide conduction is the fraction of the current which is carried by oxide ions, instead of by semiconducting or metallic mechanism. In general, a useful solid electrolyte must have a transference number in excess of 95% , meaning that approximately 5% or less of the current is carried by non-electrolytic mechanisms. Note that all of the compositions except for cadmium and terbium meet this fundamental criterion. The zero transference number of the cadmium phase indicates that it is a pure electronic (not electrolytic) conductor.

The fifth column lists literature references. In Column 5, JES refers to Journal of the Electrochemical Society, JAE refers to Journal of Applied Electrochemistry, MRB refers to Materials Research Bulletin, JSSC refers to Journal of Solid State Chemistry, and JMS refers to Journal of Materials Science.

It is presently preferred to employ the bismuth baria rhombohedral system wherein the barium stabilized phase has a barium content of 15-25 mole percent of stabilizing oxide formula, preferably 15-20 mole percent, and most preferably 20 mole percent.

Ceria stabilized with a metal oxide wherein the metal ion has a valence of +2 or +3 may also be used in the practice of this invention as the ceramic phase of the solid electrolyte composite. Representative stabilizing agents are oxides of yttrium, scandium, gadolinium and other rare earth and alkaline earth matals.

The cell of FIG. 3 was tested under the following conditions. Cell 30 comprised a symmetric "sandwich" with the ionically conductive solid electrolyte composite as the center layer 40. On either side of the solid electrolyte center layer are mixed conductive layers 41 which are coated with electronically conductive porous metallic layers 42. Woven Inconel 600 cloth was coated with commercial silver based paste to act as current collector and to allow for the passage of gases in passageways 32 and 33 which serve as the oxygen and air plenums respectively. The plenum walls were 3 mm (1/8 inch) thick sheet of Haynes 214 alloy to serve as current pickups. A single fine platinum wire was placed on the cathodic side of the cell composite in contact with the electrolyte but not in direct electrical contact with the electrodes or the metal current collectors of pickup plates. There was static air on both sides of the sample at the beginning of each test. The cathode side became depleted in oxygen while the anodic side oxygen partial pressure increased. The test cell was placed in an electric Nichrome wound muffle furnace and the temperature was raised to the appropriate level. A thermocouple, independent of the furnace thermocouple, was placed in direct contact with the test array at all times. Voltage was applied with a small 15 amp DC power supply from Darrah Electronics. The voltages, currents, and DC resistivities were read using digital multimeters. FIGS. 9 and 10, described about, are graphs plotting data points measured with the above apparatus.

The oxygen generator system of the present invention has a wide variety of applications. It can be fabricated into a light-weight, portable unit for medical use or use by firefighters and other individuals who are working in situations where an independent oxygen supply is needed. It can be fabricated into large industrial units to supply oxygen requirements in industrial processes. It can be used as an oxygen source for operations such as welding. It is versatile, its only moving part is a fan, it does not require replacement of consumables such as hydrogen peroxide or catalyst, and can continuously generate a supply of oxygen for prolonged periods of time. It can be fabricated into any desired size or shape to meet the desired application.

The solid oxide fuel cell of the present invention employs a mechanically rugged, ductile solid electrolyte ceramic composite comprising a regular, repeating array of ductile ordered, continuous metallic material such as fibers substantially surrounded by or imbedded in and supporting a ceramic matrix as the solid electrolyte in either a planar, arcuate, folded or tubular cell. The cell is connected to an electrical load, whereby when current is generated from the cell, fuel and air are converted to electric power.

Referring to FIG. 13, an electrochemical schematic for a solid oxide fuel cell in accordance with this invention is shown. Planar cell 100 comprises a center layer 111 which is the ductile electrolyte composite unique to this invention. A mixed conductor (ionically and electronically conductive) layer 112 is disposed on either side of the planar center layer 111 in intimate contact therewith. Outer layers 113 and 114 are electrodes (cathode and anode respectively). Fuel plenum chamber 115 is disposed on the anode side of the cell and air plenum chamber 116 is disposed on the cathode side of the cell. Current collectors 117 are included within the plenum chambers, contacting each electrode layer and extending through each plenum chamber to contact the bipolar plenum wall (not shown). While positive electrical contact across each chamber segment is required, the chamber current collectors are composed of material fabricated or structured so as to allow free passage of gas and not cause a significant drop in pressure through the chambers.

FIG. 14 illustrates the physical arrangement of the a basic, repeating manifclded cell design which is employed in a stack arrangement for a solid oxide fuel cell in accordance with this invention. Cell 130 comprises a symmetric "sandwich" with the ionically conductive solid electrolyte composite as the center layer 131. On either side of the solid electrolyte center layer 131 are electronically conductive porous metallic plenum chamber current pickups 132 and 133. Woven Inconel 600 cloth was coated with commercial silver based paste to act as current collector and to allow for the passage of gases in the plenum passageways 134 and 135 which serve as the fuel and air plenums respectively. Mixed conduction (ionically and electronically conductive) sub-electrode layers 136 are disposed between the solid electrolyte composite 31 and outer thin layer electrodes 137 and 138. Bipolar plenum chamber walls 139 were 3 mm (1/8 inch) thick layers of Haynes 214 alloy sheet which are in contact with the current pickups 132 and 133.

FIG. 15 is a graph depicting the logarithm of the normalized DC resistance of a section of a yttria fully stabilized zirconia stabilized composite (9% yttria) as a function of the reciprocal Kelvin temperature. This sample did not have electrodes in place, but was instead placed between two porous silver/palladium coated metal grids as current pickups. The DC resistance of the composite at 1000°C was about 100 ohms. Most of the resistance was due to the absence of normal electrodes and is reasonably linear for the test conditions. This figure depicts the resistance of the sample over a range of four orders of magnitude. The measured temperature included temperatures from 450°C to 1000°C.

FIG. 16 is a schematic representation of a bipolar manifolded multicell stack employing a solid oxide electrolyte composite.
The ratio of size of air plenum chamber to fuel plenum chamber is 2:1 because of the greater volume of air passing through the system, compared to the fuel gas volume. The fuel and air gas streams do not come into contact with each other. They are kept isolated. Gas manifolding is preferably in parallel with current interrupts in the manifold to avoid short circuits between cells. The electrical power is in series.

The fuel cell of this invention may be incorporated into transportation vehicles, utility power systems, sub-utility power systems, portable power devices, and the like.

Examples 6 and 7 are illustrative of the invention as it applies to solid oxide fuel cells.

### Example 8

An aqueous slurry of fine ZrO_{2.91}Y₂O₃ powder +0.25% polyvinylacetate was laser annealed using a CO₂ laser having a 10.6 µm wavelength, 600 W, 9.5 mm line by 0.13 mm (3/8 inch line by 0.005 inch). The ceramic melted, flowed and refroze without melting the metal support matrix. The annealing was done under flowing argon. A sample of composite was held on a computer controlled table and rastered under the CO₂ laser beam at a rate of 2.5 cm/sec (1 inch/sec). Very slow rates vaporized the sample and faster rates insufficiently melted the ceramic.

### Example 9

The slurry of Example 8 was painted onto Inconel 600 stainless steel foil and dried at 115 °C for 20 minutes. The sample-was suspended in a 5 cm (2 inch) O.D. mullite furnace tube in a silicon carbide electrically heated tube, was flushed with argon and the argon flow left on. The temperature was raised at 5°C per minute to 1340°C for 3 hours and cooled to room temperature at 5°C per minute. The procedure was repeated two more times. On the last slurry application the slurry was sucked into pores of the composite under vacuum on a Buchner funnel. The last firing was for 15 hours to densify.

## Claims

1. A solid state electrolytic cell comprising a ceramic composite body and electrically conductive porous gas permeable electrode layers which form an anode and a cathode on opposite surfaces of said composite body, said composite body comprising: an ionically conductive ceramic matrix and a ductile metallic material extending throughout said ceramic body, said metallic material being an ordered, continuous, intersupported or interconnected array forming a repeating pattern structure, said metallic array being embedded within, surrounded by and in intimate contact with said ceramic matrix throughout the composite body so as to provide a high degree of interface between the ceramic and the metallic array, said ceramic matrix at any point not being more than 1 mm from said metallic array, said ceramic matrix having been subjected to a densification step whereby the density of said ceramic matrix is greater than 90% of theoretical density, said densification step comprising melting or sintering the starting ceramic matrix material without melting of the metal in the process of embedding said metallic array within, surrounding said metallic array by and placing said metallic array in contact with said ceramic matrix, said composite body not undergoing brittle failure of said ceramic matrix in practical use.

2. The solid state electrolytic cell of Claim 1 wherein said composite body is in the form of a sheet having a layer of mixed ionic and electronic conductive material coating opposite surfaces of said sheet and a layer of electronically conductive and porous gas permeable material coating each layer of the mixed conductive material, whereby a cathode is formed on one surface thereof and an anode is formed on the other surface thereof.

3. The solid state electrolytic cell of Claim 1 having means for gas passage over said electrodes comprising a gas plenum chamber on the anode side and a separate gas plenum chamber on the cathode side.

4. A solid state electrolytic cell according to Claim 1, 2 or 3 wherein the ceramic matrix is stabilized zirconia, stabilized ceria or stabilized bismuth oxide, wherein the stabilizing agent is a metal oxide wherein the metal ion has a valence of +2, +3, +5, or +6.

5. A solid state electrolytic cell according to Claim 4 wherein the ceramic matrix is selected from yttria stabilized zirconia, ytterbia stabilized zirconia, gadolinia stabilized ceria, baria stabilized bismuth oxide and erbia stabilized bismuth oxide.

6. A solid state electrolytic cell according to Claim 1, 2 or 3 wherein said ceramic matrix comprises hafnia, titania, lanthanides such as ceria, samaria, yttria, erbia, scandia, perovskites, pyrochlores, calcia, magnesia, gadolinia or a combination of one or more thereof.

7. A solid state electrolytic cell according to Claim 1, 2 or 3 wherein said metallic material is an intersupported planar array of metallic ligaments forming a repeating diamond pattern.

8. A solid state electrolytic cell according to Claim 1, 2 or 3 wherein said metallic material is a single layer of an open mesh metal structure.

9. A solid state electrolytic cell according to Claim 8 wherein said structure is an expanded metal foil.

10. A solid state electrolytic cell according to Claim 1, 2 or 3 wherein said densification step comprises annealing the composite under a directed energy source.

11. A device for separating oxygen from air comprising one or more solid state electrolytic cells of Claim 1, 2 or 3 and means for connecting said cell to a power supply whereby, when current is passed through said cell, oxygen is separated from the air passing through said cell.

12. The device according to Claim 11 wherein said cells are placed in multiple plate stacked form in which each of the individual cells are electrically connected.

13. The device of Claim 12 wherein said cells are electrically connected in series.

14. A fuel cell comprising a solid state electrolytic cell of Claim 1, 2 or 3 and means for connecting said cell to an electrical load, whereby when current is generated from said cell, fuel and air are converted to electrical power.

15. The fuel cell according to Claim 14 wherein a plurality of individual cells are arranged in a planar stack array, said cells separated by air plenum chambers and fuel plenum chambers.

16. The fuel cell of Claim 14 wherein the cell is in corrugated form.

17. The fuel cell of Claim 14 wherein the cell is in tubular form.

## Patentansprüche

1. Festzustand-Elektrolysezelle, die einen keramischen Verbundkörper und elektrisch leitfähige poröse gasdurchlässige Elektrodenschichten umfaßt, die auf gegenüberliegenden Oberflächen des Verbundkörpers eine Anode und eine Kathode ausbilden, wobei der Verbundkörper folgendes umfaßt:
eine ionenleitfähige keramische Matrix und ein duktiles metallisches Material, das sich durch den Keramikkörper hindurch erstreckt, wobei das metallische Material ein geordnetes, kontinuierliches zwischengelagertes oder zwischenverknüpftes Gitter ist, das eine sich wiederholende Musterstruktur ausbildet, wobei das metallische Gitter in dieser Matrix durch den gesamten Verbundkörper hindurch eingebettet ist, von ihr umgeben ist und sich in innigem Kontakt mit ihr befindet, so daß ein hohes Ausmaß an Grenzfläche zwischen der Keramik und dem metallischen Gitter bereitgestellt ist, wobei sich die keramische Matrix an keinem Punkt weiter als 1 mm von dem metallischen Gitter entfernt befindet, wobei die keramische Matrix einem Verdichtungsschritt unterworfen worden ist, wodurch die Dichte der keramischen Matrix mehr als 90% der theoretischen Dichte beträgt, wobei der Verdichtungsschritt das Schmelzen oder Sintern des Ausgangskeramikmatrixmaterials ohne Schmelzen des Metalls beim Verfahren des Einbettens des metallischen Gitters in die keramische Matrix, des Umgebens des metallischen Gitters mit ihr und des In-Kontakt-Bringens des metallischen Gitters mit ihr umfaßt, wobei der Verbundkörper bei der praktischen Verwendung keiner Versprödung der keramischen Matrix unterworfen ist.

2. Festzustand-Elektrolysezelle nach Anspruch 1, wobei der Verbundkörper die Form eines Blatts besitzt, das eine Schicht aus vermischten ionisch und elektronisch leitfähigen Materialien aufweist, die entgegengesetzte Oberflächen des Blattes überzieht sowie eine Schicht aus, elektronisch leitfähigem und porösem gasdurchlässigem Material, die jede Schicht des vermischten leitfähigen Materials überzieht, wodurch auf dessen einer Oberfläche eine Kathode und auf dessen anderer Oberfläche eine Anode ausgebildet wird.

3. Festzustand-Elektrolysezelle nach Anspruch 1, die über Gasdurchlaßmittel oberhalb der Elektroden verfügt, die eine Gasfüllkammer auf der Anodenseite und eine getrennte Gasfüllkammer auf der Kathodenseite umfassen.

4. Festzustand-Elektrolysezelle nach Anspruch 1, 2 oder 3, in der die keramische Matrix stabilisierte Zirkonium-, stabilisierte Cer- oder stabilisierte Bismuthoxide sind, wobei das Stabilisierungsmittel ein Metalloxid ist, dessen Metallion eine Wertigkeit von +2, +3, +5 oder +6 aufweist.

5. Festzustand-Elektrolysezelle nach Anspruch 4, wobei die keramische Matrix aus Yttriumoxid-stabilisierten Zirkoniumoxiden, Ytterbiumoxid-stabilisierten Zirkoniumoxiden, Gadoliniumoxid-stabilisierten Ceroxiden, Bariumoxidstabilisierten Bismuthoxiden und Erbiumoxid-stabilisierten Bismuthoxiden gewählt ist.

6. Festzustand-Elektrolysezelle nach Anspruch 1, 2 oder 3 wobei die keramische Matrix Hafniumoxide, Titanoxide, Lanthanide wie etwa Ceroxide, Samariumoxide, Yttriumoxide, Erbiumoxide, Scandiumoxide, Perowskite, Pyrochlore, Calciumoxide, Magnesiumoxide, Gadoliniumoxide oder eine Kombination aus einem oder mehreren davon umfaßt.

7. Festzustand-Elektrolysezelle nach Anspruch 1, 2 oder 3 wobei das metallische Material ein zwischengelagertes ebenes Gitter von metallischen Ligamenten ist, die ein sich wiederholendes Rautenmuster ausbilden.

8. Festzustand-Elektrolysezelle nach Anspruch 1, 2 oder 3, wobei das metallische Material eine einzelne Schicht einer offenmaschigen Metallstruktur ist.

9. Festzustand-Elektrolysezelle nach Anspruch 8, wobei die Struktur eine expandierte Metallfolie ist.

10. Festzustand-Elektrolysezelle nach Anspruch 1, 2 oder 3, wobei der Verdichtungsschritt das Härten des Verbundkörpers unter einer gerichteten Energiequelle umfaßt.

11. Vorrichtung zur Abtrennung von Sauerstoff aus Luft, die eine oder mehrere Festzustand-Elektrolysezellen nach Anspruch 1, 2 oder 3 und Mittel zur Verbindung der Zelle mit einer Stromquelle umfaßt, wobei Sauerstoff bei Hindurchleitung von Strom durch die Zelle aus der Luft abgetrennt wird, die durch die Zelle hindurchtritt.

12. Vorrichtung nach Anspruch 11, in der die Zellen in eine Mehrfachplattenstapelform gebracht werden, in der jede der einzelnen Zellen elektrisch verbunden ist.

13. Vorrichtung nach Anspruch 12, in der die Zellen elektrisch in Reihe geschaltet sind.

14. Brennstoffzelle, die eine Festzustand-Elektrolysezelle nach Anspruch 1, 2 oder 3 und Mittel zur Verbindung der Zelle mit einer elektrischen Last umfaßt, wodurch bei Erzeugung von Strom in der Zelle Brennstoff und Luft in elektrische Spannung umgewandelt werden.

15. Brennstoffzelle nach Anspruch 14, wobei eine Vielzahl von einzelnen Zellen als planares Stapelgitter angeordnet sind, wobei die Zellen durch Luftfüllkammern und Brennstoffüllkammern getrennt sind.

16. Brennstoffzelle nach Anspruch 14, wobei die Zelle eine gewellte Form aufweist.

17. Brennstoffzelle nach Anspruch 14, wobei die Zelle eine Röhrenform aufweist.

## Revendications

1. Cellule électrolytique à l'état solide, comprenant un corps composite céramique et des couches d'électrode perméables au gaz poreuses électriquement conductrices, qui forment une anode et une cathode sur des surfaces opposées dudit corps composite, ledit corps composite comprenant : une matrice céramique ioniquement conductrice et une matière métallique ductile s'étendant à travers tout ledit corps céramique, ladite matière métallique étant une rangée ordonnée, continue, intersupportée ou interconnectée formant une structure à motif répétitif, ladite rangée métallique étant noyée à l'intérieur, entourée par et en contact intime avec ladite matrice céramique à travers tout le corps composite, de façon à fournir un degré élevé d'interface entre la céramique et la rangée métallique, ladite matrice céramique en un point quelconque n'étant pas à plus de 1 mm de ladite rangée métallique, ladite matrice céramique ayant été soumise à une étape de densification grâce à quoi la densité de ladite matrice céramique est supérieure à 90% de la densité théorique, ladite étape de densification comprenant la fusion ou le frittage de la matière de la matrice céramique de départ sans fusion du métal dans le processus de noyer ladite rangée métallique dans, d'entourer ladite rangée métallique par et de placer ladite rangée métallique en contact avec ladite matrice céramique, ledit corps composite ne subissant pas une rupture fragile de ladite matrice céramique en usage pratique.

2. Cellule électrolytique à l'état solide selon la revendication 1, dans laquelle ledit corps composite est sous la forme d'une feuille ayant une couche de matière conductrice électronique et ionique mélangée enrobant des surfaces opposées de ladite feuille et une couche de matière perméable au gaz poreuse et électroniquement conductrice enrobant chaque couche de la matière conductrice mélangée, une cathode étant formée sur une surface de celle-ci et une anode étant formée sur l'autre surface de celle-ci.

3. Cellule électrolytique à l'état solide selon la revendication 1, ayant des moyens pour le passage du gaz sur lesdites électrodes comprenant une chambre de diffusion de gaz sur le côté anode et une chambre de diffusion de gaz séparée sur le côté cathode.

4. Cellule électrolytique à l'état solide selon la revendication 1, 2 ou 3, dans laquelle la matrice céramique est de la zircone stabilisée, de l'oxyde de cérium stabilisé ou de l'oxyde de bismuth stabilisé, l'agent de stabilisation étant un oxyde métallique dans lequel l'ion métal présente une valence de +2, +3, +5, ou +6.

5. Cellule électrolytique à l'état solide selon la revendication 4, dans laquelle la matrice céramique est choisie à partir de la zircone stabilisée par de l'oxyde d'yttrium, de la zircone stabilisée par de l'oxyde d'ytterbium, de l'oxyde de cérium stabilisé par de l'oxyde de gadolinium, de l'oxyde de bismuth stabilisé par de l'oxyde de baryum, et de l'oxyde de bismuth stabilisé par de l'oxyde d'erbium.

6. Cellule électrolytique à l'état solide selon la revendication 1, 2 ou 3, dans laquelle ladite matrice céramique comprend de l'oxyde d'hafnium, de l'oxyde de titanium, des lanthanides, tels que de l'oxyde de cérium, de l'oxyde de samarium, de l'oxyde d'yttrium, de l'oxyde d'erbium, de l'oxyde de scandium, des perovskites, des pyrochlores, de l'oxyde de calcium, de l'oxyde de magnésium, de l'oxyde de gadolinium, ou une combinaison de ceux-ci.

7. Cellule électrolytique à l'état solide selon la revendication 1, 2 ou 3, dans laquelle ladite matière métallique est une rangée plane intersupportée de ligaments métalliques formant un motif répétitif en diamant.

8. Cellule électrolytique à l'état solide selon la revendication 1, 2 ou 3, dans laquelle ladite matière métallique est une couche unique d'une structure métallique à mailles ouvertes.

9. Cellule électrolytique à l'état solide selon la revendication 8, dans laquelle ladite structure est une feuille métallique ayant subi une expansion.

10. Cellule électrolytique à l'état solide selon la revendication 1, 2 ou 3, dans laquelle ladite étape de densification comprend le recuit du composite sous une source d'énergie dirigée.

11. Dispositif pour séparer de l'oxygène de l'air comprenant une ou plusieurs cellules électrolytiques à l'état solide selon les revendications 1, 2 ou 3, et des moyens pour relier ladite cellule à une alimentation en puissance grâce à quoi, quand du courant traverse ladite cellule, l'oxygène est séparé de l'air traversant ladite cellule.

12. Dispositif selon la revendication 11, dans lequel lesdites cellules sont placées sous forme empilée à plaques multiples, dans laquelle chacune des cellules individuelles sont électriquement connectées.

13. Dispositif selon la revendication 12, dans lequel lesdites cellules sont électriquement connectées en série.

14. Pile à combustible comprenant une cellule électrolytique à l'état solide selon la revendication 1, 2 ou 3, et des moyens pour relier ladite cellule à une charge électrique, grâce à quoi, quand du courant est engendré à partir de ladite cellule, du combustible et de l'air sont convertis en puissance électrique.

15. Pile à combustible selon la revendication 14, dans laquelle une pluralité de cellules individuelles sont agencées en une rangée empilée plane, lesdites cellules étant séparées par des chambres de diffusion d'air et des chambres de diffusion de combustible.

16. Pile à combustible selon la revendication 14, dans laquelle la pile est sous forme ondulée.

17. Pile à combustible selon la revendication 14, dans laquelle la pile est sous forme tubulaire.
